# EUROPEAN PATENT SPECIFICATION

(11) **EP 2 921 684 B1**
(45) Date of publication and mention of the grant of the patent: **17.07.2019**
(21) Application number: 15154851.8
(22) Date of filing: 12.02.2015
(51) Int. Cl.: F02K 1/44, F02K 1/34, F02K 1/52, F02K 1/82, F02K 3/06

(54) **Integrated primary nozzle**
Integrierte Primärdüse
Tuyère primaire intégrée

(30) Priority: 19.03.2014 US 201414219143
(43) Date of publication of application: 23.09.2015
(73) Proprietor: The Boeing Company, Chicago, IL 60606-1596 (US)
(72) Inventor: Cerra, David F., Everett, WA Washington 98204 (US); Tretow, Paul R., Everett, WA Washington 98204 (US); Willie, Robert H., Everett, WA Washington 98204 (US); Carter, III, Robert B., Everett, WA Washington 98204 (US)
(74) Representative: Witte, Weller & Partner Patentanwälte mbB

(56) References cited:
- EP-A2- 1 561 939
- WO-A1-2013/121150
- GB-A- 2 372 779
- US-A1- 2008 044 280
- US-A1- 2009 019 857

## Description

### Background

Industries, such as airlines and airline manufacturers, are always looking for ways to lower costs that are associated with flying. For example, airline manufacturers attempt to find different ways of lowering maintenance costs, reducing emissions, reducing noise and reducing fuel consumption.

Fuel prices are generally very volatile and are one of the largest expenses of an airline. Reducing these fuel expenses can help an airline compete in today's competitive market. Airline manufacturers may attempt to improve fuel efficiency using a variety of different methods. For example, more fuel efficient engines may be designed, aerodynamics may be improved, the weight of parts may be reduced, and the like. For example, changing the design of the primary nozzle or the vents that are associated with an engine, such as a bypass turbofan turbine engine, may be changed in an attempt to increase the performance of the engine. Improving these, and other, characteristics, however, can be very challenging and costly.

GB 2 372 779 A refers to a gas turbine engine exhaust nozzle arrangement which comprises a nozzle and a plurality of noise-reducing tabs. The tabs extend from a downstream periphery of the nozzle. Various means are provided for changing the operational condition of the tabs, according to whether or not noise reduction is required. The tabs may simply be retractable within the nozzle or projections 34 may be provided on a rotatable member the projections thereby being movable to and from positions in which they cover/overlap the notches between tabs. Movement may be effected by pinion and rack arrangements or actuators acting on a pivotal angled arm.

EP 1 561 939 A2 describes a gas turbine engine exhaust nozzle which includes a row of laterally sinuous chevrons extending from an aft end of an exhaust duct. The chevrons have radially outer and inner surfaces bound by a laterally sinuous trailing edge extending between a base of the chevrons adjoining the duct and an axially opposite apex of the chevrons.

### Summary

It should be appreciated that this Summary is provided to introduce a selection of concepts in a simplified form that are further described below in the Detailed Description. This Summary is not intended to be used to limit the scope of the claimed subject matter.

Apparatus, system and methods described herein are directed at providing an integrated primary nozzle. According to an aspect and claim 1, an integrated primary nozzle is formed using a forward cowl and an integrated panel. The integrated panel is concentric to the forward cowl and extends beyond an aft end of the forward cowl. An annular vent is formed between the outer surface of the integrated panel and the inner surface of the forward cowl. The integrated panel is an integrally formed combination of a portion of a primary nozzle outer wall, an acoustic treatment, and an aft cowl. The acoustic treatment is an acoustic liner that includes a honeycomb core sandwiched between a perforated front sheet and a solid back sheet.

A system for an integrated primary nozzle includes a nacelle, a forward cowl, and an integrated panel. The integrated panel is coupled to the nacelle or the engine and is disposed partially within the forward cowl. The integrated panel extends longitudinally beyond an aft end of the forward cowl. The integrated panel is an integrally formed combination of the primary nozzle outer wall, an acoustic treatment, and the aft cowl. An annular vent is defined by a gap that is between the outer surface of the integrated panel and the inner surface of the forward cowl. According to yet another aspect and claim 8, a method is configured to form an integrated primary nozzle. The method includes manufacturing an integrated panel as an integrally formed combination of an aft cowl, an acoustic treatment, and a portion of a primary nozzle outer wall. A size of the annular vent is determined. The integrated panel is positioned concentrically to the forward cowl such that the annular vent has the determined size. The acoustic treatment is an acoustic liner that includes a honeycomb core sandwiched between a perforated front sheet and a solid back sheet.

The features, functions, and advantages that have been discussed can be achieved independently in various embodiments of the present disclosure or may be combined in yet other embodiments, further details of which can be seen with reference to the following description and drawings.

### Brief Description of the Drawings

FIGURE 1 shows an illustration of a propulsion system that includes an integrated primary nozzle;
FIGURE 2 shows a cross section schematic of an integrated primary nozzle;
FIGURE 3 shows a cross section schematic of an annular vent that includes a fairing that is attached to a primary nozzle outer wall;
FIGURE 4 shows a cross section schematic of an integrated primary nozzle system that includes a variable panel thickness; and
FIGURE 5 shows an illustrative routine relating to manufacturing and positioning an integrated primary nozzle, according to various embodiments presented herein.

### Detailed Description

The following detailed description is directed to an integrated primary nozzle. Utilizing the concepts and technologies described herein, an integrated primary nozzle is directed to one or more of a more optimally positioned annular vent, a larger acoustically treated area, a lower weight, an increase in primary nozzle performance, a reduction in part count, and a reduction in assembly hours.

Traditional annular vent designs splice multiple pieces of structure together to form an annular vent for an engine, such as a high bypass turbofan turbine engine. For example, a splice joint may be used to attach a cantilevered structure (hereinafter referred to as a "fairing") to the aft end of the aft cowl with a stiffening bullnose at the forward end of the aft cowl. This type of design results in a relatively thick overall structure since each part that is spliced together has a different thickness. For example, using a traditional annular vent design results in a gap between the forward cowl and the fairing of the aft cowl that is larger than desired.

The integrated primary nozzle reduces the number of parts and weight from a traditional annular vent design by eliminating the splice and the fairing that is included in the traditional annular vent design as described herein. With fewer parts in the integrated primary nozzle, there may be a reduction in production and manufacturing costs by reducing the material and the assembly time and effort used to manufacture the annular vent.

The annular vent may be positioned farther aft as compared to the traditional annular vent design and the forward cowl may be moved farther aft since the gap formed by the annular vent may be reduced in size when compared to the gap that results from the traditional method of splicing multiple pieces of structure together. For example, in one embodiment the gap is reduced from about 3,81 cm (1.5 inches) to about 1,27 cm (.5 inches). Positioning the annular vent farther aft may result in a more optimally positioned annular vent. A larger portion of the primary nozzle outer wall may also be covered with acoustic treatment as compared to a traditional annular vent design. For example, acoustic treatment may cover the primary nozzle wall from about the aft end to a location beneath the forward cowl.

In the following detailed description, references are made to the accompanying drawings that form a part hereof, and which are shown by way of illustration, specific embodiments, or examples. Referring now to the drawings, in which like numerals represent like elements through the several figures, a configurable tray table and method for employing the same according to the various embodiments will be described.

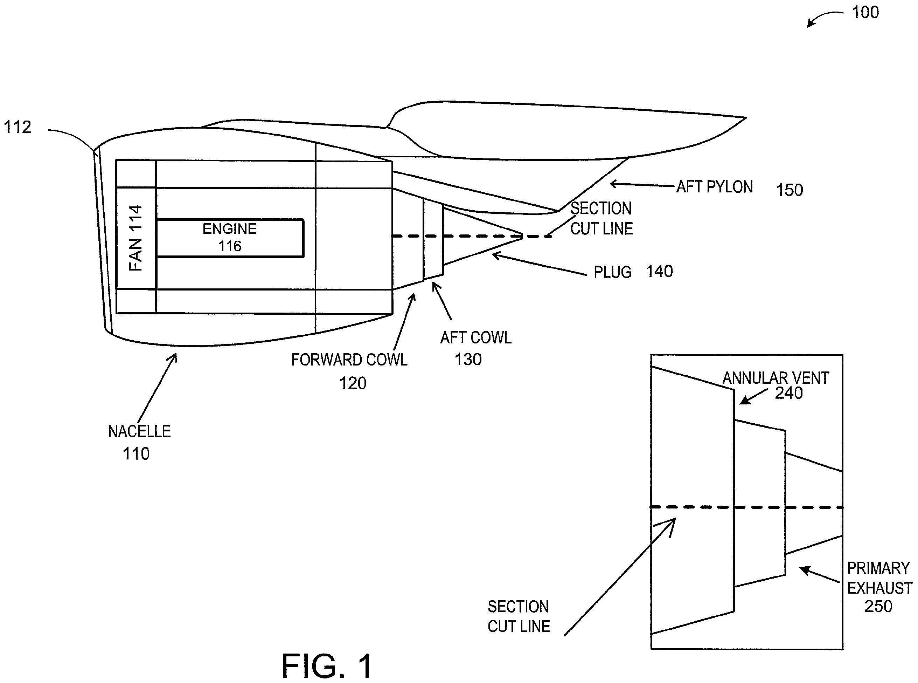

FIGURE 1 shows an illustration of a propulsion system that includes an integrated primary nozzle. As illustrated, propulsion system 100 illustrates nacelle110, inlet 112, fan 114, engine 116, forward cowl 120, aft cowl 130, plug 140 and aft pylon 150.

Propulsion system 100 may include an engine 116 (e.g., a bypass turbofan gas turbine engine) that is housed in nacelle 110. Nacelle 110 is secured to a wing (not shown) using some fastening system (e.g., a strut, pylon). Nacelle 110 includes inlet 112 that supplies air to engine 116.

Propulsion system 100 includes a fan 114 that located at a forward end of the engine 116 near inlet 112. Air that passes through fan 114 is divided into a flow that passes through engine 116, flow used for cooling, that is eventually exhausted through the annular vent 240, and a flow that passes through a fan duct. Engine 116 produces a primary exhaust flow, discharged through a primary exhaust 250. Some of the fan exhaust flow, used as cooling air, passes through an annular vent 240. The fan exhaust flow, the primary exhaust flow, and the annular vent exhaust flow form the thrust that is generated by the engine. A plug 140 may be included depending on the design.

In bypass turbofan engines, the primary exhaust flow and the fan exhaust flow may be optimized for specific engines and/or specific operating conditions. For example, the positioning and the size of the annular vent may be changed depending on the desired operating characteristics. According to an embodiment, the integrated primary nozzle described herein positions the annular vent 240 farther aft compared to traditional designs. As a result, a relatively smaller gap may also be used in forming the annular vent 240 between the forward cowl 120 and aft cowl 130 since the fairing in traditional designs is not included in the integrated primary nozzle.

The integrated primary nozzle described herein may also include more acoustic treatment as compared to traditional designs. For example, acoustic treatment may be disposed longitudinally along a substantial length of the aft cowl 130 and beneath a portion of the forward cowl 120.

The illustration of propulsion system 100 is not meant to imply physical or architectural limitations to the manner in which different embodiments may be implemented. Other components in addition to and/or in place of the ones illustrated may be used. Some components may also be unnecessary in some embodiments. The following figures provide more detail with regard to the integrated primary nozzle.

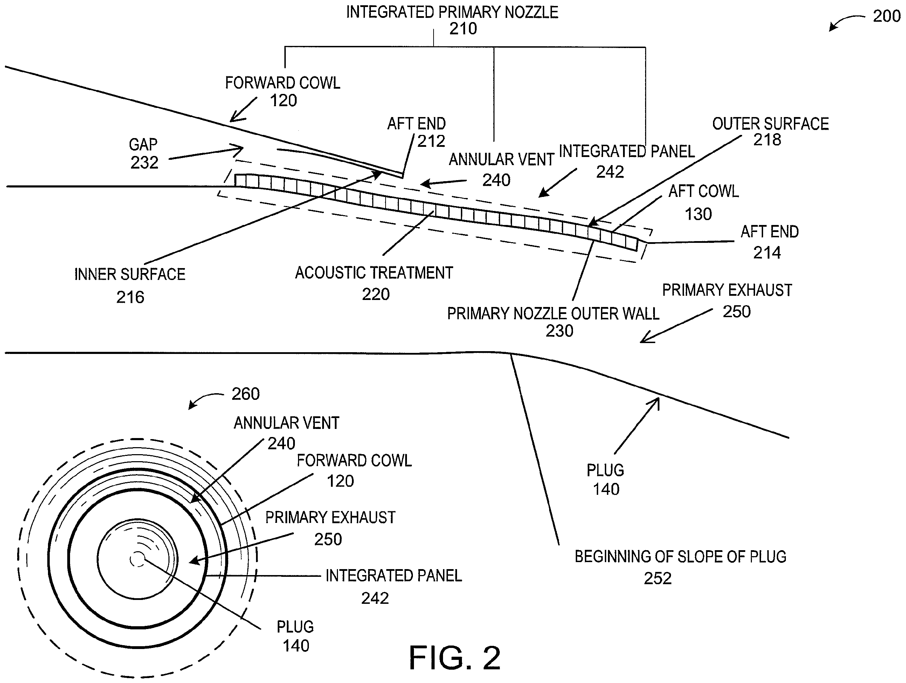

FIGURE 2 shows a cross section schematic of an integrated primary nozzle. As illustrated, integrated primary nozzle system 200 includes forward cowl 120, aft cowl 130, plug 140 and acoustic treatment 220. According to an embodiment, the integrated primary nozzle 210 includes forward cowl 120, annular vent 240, and integrated panel 242 configured for a bypass turbofan turbine engine for commercial aircraft. In this regard, integrated panel 242 includes the combination of an integrally formed aft cowl 130, acoustic treatment 220, and a primary nozzle outer wall 230. The integrated primary nozzle, however, may be configured and designed for other types of applications (e.g., boats, smaller planes, cars).

As illustrated, annular vent 240 includes a space or gap 232 that is formed between and defined by the inner surface 216 of forward cowl 120 and an outer surface 218 of integrated panel 242. Instead of having a fairing that is connected to the primary nozzle outer wall 230, aft cowl 130 is integrated with primary nozzle outer wall 230 and acoustic treatment 220 to form integrated panel 242. In the example that is shown in FIG. 2, integrated primary nozzle includes acoustic treatment 220 that extends to within at least a few inches (e.g., 7,62 cm (three inches), 5,08 cm (two inches), 2,54 cm (one inch)) of the aft end 214 of the integrated panel 242.

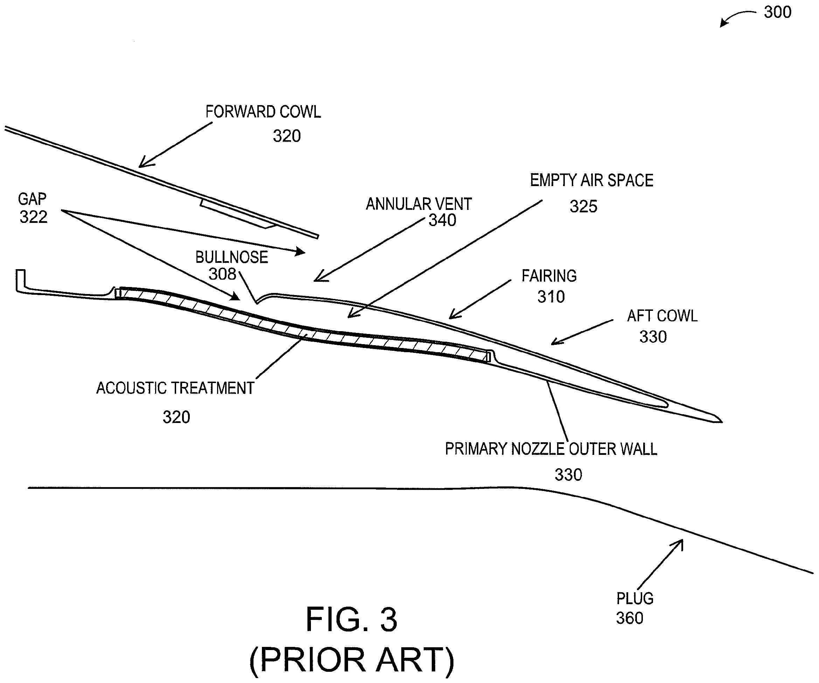

In contrast to splicing multiple pieces of structure together that results in relatively large gaps between the forward cowl 120 and aft cowl 130 (See FIGURE 3 and related discussion), the integrated primary nozzle includes an annular vent system having a relatively smaller gap 232 between the forward cowl 120 and primary nozzle outer wall 230. According to an embodiment, the gap 232 that is formed between the inner surface 216 of forward cowl 120 and the outer surface 218 of the integrated panel 242is approximately 1,27 cm (.5 inches). Other sized gaps may be configured depending on the desired characteristics. Changing the characteristics of an annular vent 240 may decrease Specific Fuel Consumption (SFC) or increase SFC. For example, a properly positioned and pressurized annular vent may improve SFC by 0.25% or more.

As illustrated, aft cowl 130 is coupled to primary nozzle outer wall 230 and forms an integrated panel 242 that is substantially a same uniform thickness. Comparing FIGURE 3 to FIGURE 2 it can be seen that the integrated primary nozzle system 200 reduces the number of parts used to define the annular vent 240. For example, fairing 310 that is shown in FIGURE 3 is removed. According to an embodiment, more acoustic treatment 220 may be included in the integrated panel 242 that is part of the integrated primary nozzle system 200 as compared to acoustic treatment 320 as shown in FIGURE 3. The aft end 212 of the forward cowl 120 may be positioned at various locations relative to integrated panel 242. According to an embodiment, the aft end 212 of forward cowl 120 is positioned farther aft toward aft end 214 of integrated panel 242 as compared to the position of the aft end of the forward cowl in traditional annular vent designs (e.g., as shown in FIGURE 3). According to an embodiment, the aft end 212 of forward cowl 120 may be positioned farther aft by several inches. According to an embodiment, the aft end 212 of forward cowl 120 is less than about 45,72 cm (18 inches) from the aft end 214 of integrated panel 242. According to another embodiment, the aft end 212 of forward cowl 120 is positioned within 30,48 cm (twelve inches) of a beginning of slope of plug 252.

View 260 illustrates an end view looking directly into the nacelle 100 and showing annular vent 240, primary exhaust 250 and plug 140. As illustrated, the forward cowl 120 and integrated panel 242 are concentric to one another. Integrated panel 242 is positioned partially within forward cowl 120 to form annular vent 240 having a gap 232. According to other embodiments, a forward cowl may be disposed in a different manner to an integrated panel. For example, the integrated panel 242 may be formed to have a square opening, or some other shape opening (e.g. oval) and the forward cowl may be formed to have a larger square opening, or some other shape opening.

Acoustic treatment 220 is directed at reducing the noise of the engine. One source of noise from an aircraft is engine noise. The acoustic treatment 220 is an acoustic liner that includes a honeycomb core sandwiched between a perforated front sheet and a solid back sheet. The perforated front sheet is aligned with the primary flow so that the sound waves pass through the front sheet and into the honeycomb core of acoustic treatment 220 where the sound waves are dissipated. The number of holes, the pattern of the holes, as well as other characteristics of acoustic treatment 220 may be changed depending on the application. The acoustic treatment 220 that is shown in integrated primary nozzle system 200 may extend from a location beneath forward cowl 120 to near an aft end (or all of the way to the end) of the primary nozzle outer wall 230. According to an embodiment, the acoustic treatment extends to within a few inches (e.g., 2,54 cm (1 inches), 5,08 cm (2 inches), 7,62 cm (3 inches)) of the aft end 214 of integrated panel 242.

FIGURE 3 shows a cross section schematic of an annular vent that includes a fairing that is attached to a primary nozzle outer wall. As illustrated, primary nozzle system 300 includes forward cowl 320, aft cowl 330 and plug 360.

Forward cowl 320 and aft cowl 330 form an annular vent 340. A fairing 310 is attached to the primary nozzle outer wall 330 and is not integrated with the acoustic treatment 320. As can be seen, there is a gap 322 between fairing 310 and acoustic treatment 320. Further, there is an empty air space 325 between aft cowl 330, fairing 310 and primary nozzle outer wall 430.

As illustrated, fairing 310 is spliced to primary nozzle outer wall430. In the fairing design illustrated in FIGURE 3, the fairing 310 that includes the bullnose 308 at the end, the empty air space 325 adds to the thickness of the acoustic treatment 320 and primary nozzle outer wall 430. The empty air space 325 is designed to account for the relative motion of the surfaces during operation (e.g., a flight). For example, the different surfaces deflect varying amounts depending on the flying conditions.

As illustrated, the gap 322 between the forward cowl 120 and fairing 310 is approximately 3,81 cm (1.5 inches). Other traditional annular designs may have different gaps, but the gaps are larger compared to the gap 232 of an integrated primary nozzle as shown in FIGURE 2 meeting the same requirements as described herein. As can be seen, the position of annular vent 340 is farther forward as compared to the position of annular vent 240 as illustrated in FIGURE 2.

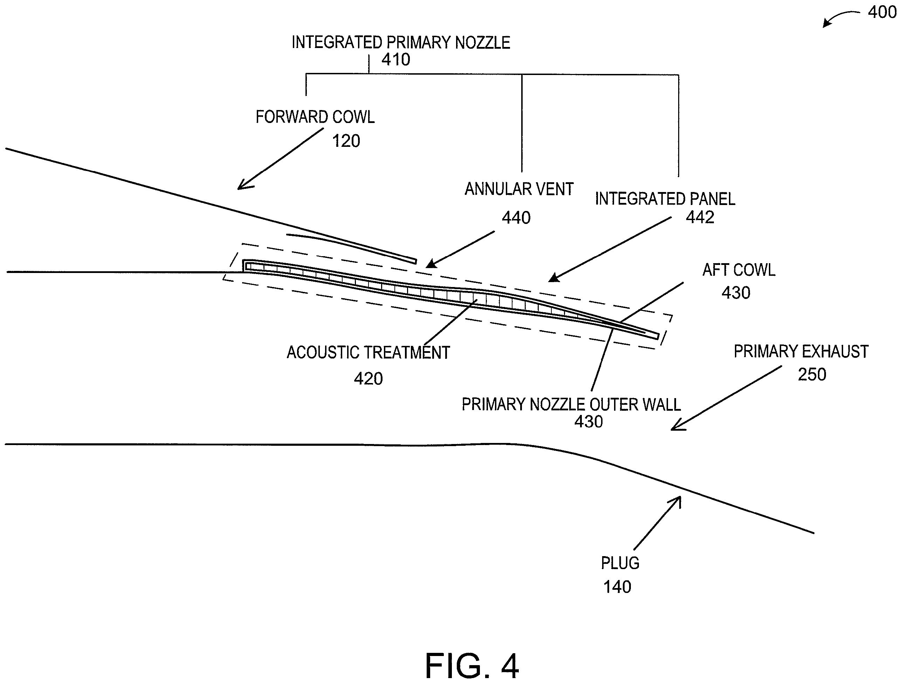

Acoustic treatment 320 is illustrated on primary nozzle outer wall 430. The acoustic treatment 320 in FIGURE 3 covers less area than the acoustic treatment that is illustrated in the integrated primary nozzle system 200 that is shown in FIGURE 2 or the integrated primary nozzle system 400 that is shown in FIGURE 4.

Turning now to the description of FIGURE 4, an embodiment illustrating a variable panel thickness is described. FIGURE 4 shows a cross section schematic of an integrated primary nozzle system 400 that includes a variable panel thickness. As illustrated, integrated primary nozzle 410 includes an annular vent 440, forward cowl 120, and integrated panel 442. In this regard, the integrated panel 442 includes the combination of an integrally formed aft cowl 430, acoustic treatment 420, and primary nozzle outer wall 430.

The integrated primary nozzle system 400 is substantially similar to the integrated primary nozzle system 200 as illustrated in FIGURE 2. In the current example, integrated panel 442 is a variable thickness panel that is formed by primary nozzle outer wall 430, acoustic treatment 420 and aft cowl 430. In contrast to having a substantially constant panel thickness, the integrated panel 442 thickness varies at different locations. The thicknesses may be determined based on various design characteristics. For example, a portion of integrated panel 442 may be thicker or thinner at one or more locations to adjust the flow over the portion of the integrated panel 442.

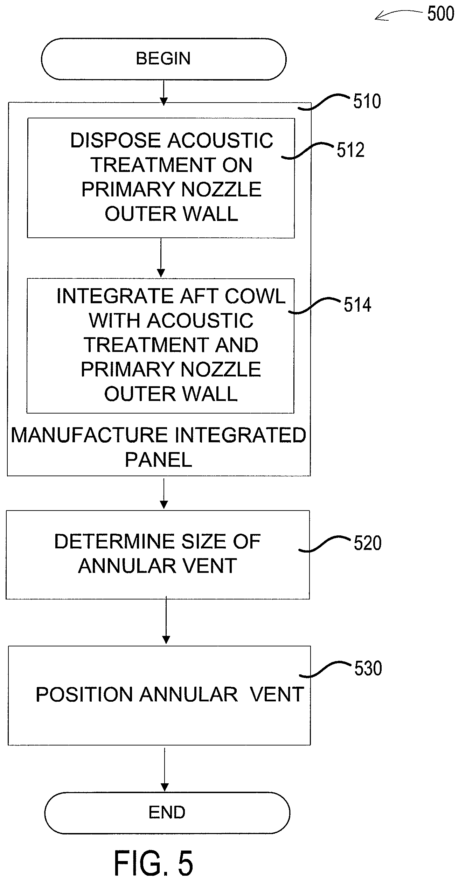

Turning now to FIGURE 5, an illustrative routine is described relating to manufacturing and positioning an integrated primary nozzle. It should be appreciated that more or fewer operations may be performed than shown in the figures and described herein. These operations may also be performed in a different order than those described herein.

Routine 500 begins at operation 510, where an integrated panel is manufactured. According to an embodiment, the integrated panel is an integrally formed combination of an aft cowl, acoustic treatment, and a portion of a primary nozzle outer wall. The acoustic treatment may be disposed between a primary nozzle outer wall and an aft cowl.

At operation 512, the acoustic treatment is disposed on the primary nozzle outer wall. According to an embodiment, the acoustic treatment is a honeycomb structure that includes small holes drilled on the side of the primary flow coming from an engine. Other types of acoustic treatments may be used. As discussed above, the acoustic treatment may be disposed along a length of the primary nozzle outer wall to an aft end of the aft cowl, near the aft end of the aft cowl, or some other length. According to an embodiment, the acoustic treatment is applied to the primary nozzle wall from about the aft end of the primary nozzle outer wall to a location beneath the inner surface of the forward cowl.

At operation 514, the aft cowl is integrated with the acoustic treatment and the primary nozzle outer wall. For example, a structure, such as sheet metal, may be coupled to the top of the acoustic treatment. According to another embodiment, the acoustic treatment is manufactured to include a top sheet that is directly integrated onto the acoustic treatment. According to an embodiment, the aft cowl is integrated with the acoustic treatment and the primary nozzle outer wall such that there is not a gap at the forward end.

From operation 510, routine 500 continues to operation 520, where a size of the annular vent is determined. The size of the annular vent may be determined using a variety of criteria. For example, the size of the annular vent may be based on the desired operating characteristics. According to an embodiment, the size of the annular vent is based on a size of the gap between the forward cowl and the integrated panel. Due to the structure and manufacturing method disclosed herein, a smaller gap may be used in forming the annular vent 240, 440 positioned between the forward cowl 120 and the integrated panel 242, 442 since the fairing in traditional designs is not included in the integrated primary nozzle as described herein. According to an embodiment, the gap may be sized to approximately 1,27 cm (0.5 inches). Other gap sizes may be used depending on the application. For example, some turbine engines may operate more efficiently having a gap size of 0,76 cm (0.3 inches) to 1,52 cm (0.6 inches) and the like.

From operation 520, routine 500 continues to operation 530. At operation 530, the annular vent is positioned. As discussed above, the integrated panel may be positioned relative to the forward cowl to adjust the performance characteristics of the annular vent. According to an embodiment, the annular vent is positioned farther aft (e.g., 10,16 cm (4 inches), 12,7 cm (5 inches), 15,24 cm (6 inches)) as compared to a traditional annular vent as illustrated in FIGURE 3. Routine 500 then flows to an end operation and returns to processing other actions.

The subject matter described above is provided by way of illustration only and should not be construed as limiting. Various modifications and changes may be made to the subject matter described herein without following the example embodiments and applications illustrated and described, and without departing from the scope of the present disclosure, which is set forth in the following claims.According to an aspect of the present disclosure there is provided an integrated primary nozzle, comprising a forward cowl; an integrated panel concentric to the forward cowl and extending longitudinally beyond an aft end of the forward cowl, wherein the integrated panel is an integrally formed combination of a primary nozzle outer wall, an acoustic treatment, and an aft cowl; and an annular vent formed between an outer surface of the integrated panel and an inner surface of the forward cowl.

The acoustic treatment is an acoustic liner that includes a honeycomb core sandwiched between a perforated front sheet and a solid back sheet.

The integrated primary nozzle disclosed herein wherein the acoustic treatment is disposed between the aft cowl and the primary nozzle outer wall.

The integrated primary nozzle disclosed herein wherein the annular vent includes a gap defined by the outer surface of the integrated panel and the inner surface of the forward cowl.

The integrated primary nozzle disclosed herein wherein a gap between the outer surface of the integrated panel and the inner surface of the forward cowl at an aft end of the forward cowl is less than 2,54 cm (one inch).

The integrated primary nozzle disclosed herein wherein the aft end of the forward cowl is positioned within 30,48 cm (a foot) of an aft end of the integrated panel.

The integrated primary nozzle disclosed herein wherein a thickness of the integrated panel is one of a constant thickness or a variable thickness.

The integrated primary nozzle disclosed herein wherein the acoustic treatment extends from a location before the aft end of the forward cowl to within 7,62 cm (three inches) of an aft end of the integrated panel.

According to another aspect of the present disclosure there is provided a system for an integrated primary nozzle, comprising a nacelle; a forward cowl that is coupled to the nacelle; an integrated panel that is coupled to either the nacelle or an engine and is disposed partially within the forward cowl and extending longitudinally beyond an aft end of the forward cowl, wherein the integrated panel is an integrally formed combination of a primary nozzle outer wall, an acoustic treatment, and an aft cowl; and an annular vent that is defined by a gap that is between an outer surface of the integrated panel and an inner surface of the forward cowl. The acoustic treatment is an acoustic liner that includes a honeycomb core sandwiched between a perforated front sheet and a solid back sheet.

The system disclosed herein wherein the gap is less than 3,81 cm (one and half inches).

The system disclosed herein wherein the annular vent is positioned within 45,72 cm (a foot and a half) of an aft end of the forward cowl.

The system disclosed herein wherein the gap is less than 2,54 cm (one inch).

The system disclosed herein wherein a thickness of the integrated panel is a variable thickness.

The system disclosed herein wherein the acoustic treatment is a honeycomb structure that is disposed between the aft cowl and the primary nozzle outer wall.

The system disclosed herein wherein the acoustic treatment extends from an aft end of the forward cowl to within 16,24 cm (six inches) of an aft end of the integrated panel.

According to another aspect of the present disclosure there is provided a method for forming an integrated primary nozzle, comprising manufacturing an integrated panel as an integrally formed combination of an aft cowl, an acoustic treatment, and a portion of a primary nozzle outer wall; determining a size of an annular vent; and positioning the integrated panel concentrically to a forward cowl such that the annular vent has the determined size. The acoustic treatment is an acoustic liner that includes a honeycomb core sandwiched between a perforated front sheet and a solid back sheet.

The method as disclosed herein wherein positioning the integrated panel comprises placing a portion of the integrated panel within an inner surface of the forward cowl.

The method disclosed herein wherein positioning the integrated panel comprises positioning the integrated panel within 30,48 cm (twelve inches) of a beginning of a slope of a plug.

The method disclosed herein wherein determining the size of the annular vent comprises determining the size of the annular vent such that a gap that is formed between an inner surface of the forward cowl and an outer surface of the integrated panel is less than 2,54 cm (one inch).

The method disclosed herein wherein manufacturing the integrated panel comprises manufacturing the integrated panel to have a substantially constant thickness.

The method disclosed herein wherein manufacturing the integrated panel that includes the acoustic treatment comprises sandwiching a honeycomb acoustic treatment between an aft cowl and a primary nozzle outer wall.

## Claims

1. An integrated primary nozzle (210; 410), comprising:
a forward cowl (120);
an integrated panel (242; 442) concentric to the forward cowl (120) and extending longitudinally beyond an aft end (212) of the forward cowl (120), wherein the integrated panel (242; 442) is an integrally formed combination of a primary nozzle outer wall (230; 430), an acoustic treatment (220; 420), and an aft cowl (130; 330); and
an annular vent (240; 440) formed between an outer surface (218) of the integrated panel (242; 442) and an inner surface (216) of the forward cowl (120); and wherein the acoustic treatment is an acoustic liner that includes a honeycomb core sandwiched between a perforated front sheet and a solid back sheet.

2. The integrated primary nozzle of claim 1, wherein the acoustic treatment (220; 420) is disposed between the aft cowl (130; 330) and the primary nozzle outer wall (230; 430).

3. The integrated primary nozzle of any preceding claim, wherein the annular vent (240; 440) includes a gap (232) defined by the outer surface (218) of the integrated panel (242; 442) and the inner surface (216) of the forward cowl (120).

4. The integrated primary nozzle of any preceding claim, wherein a gap between the outer surface (218) of the integrated panel (242; 442) and the inner surface (216) of the forward cowl (120) at an aft end (212) of the forward cowl (120) is less than 2.54 cm [one inch].

5. The integrated primary nozzle of any preceding claim, wherein the aft end (212) of the forward cowl (120) is positioned within 30.48 cm [a foot] of an aft end (214) of the integrated panel (242; 442).

6. The integrated primary nozzle of any preceding claim, wherein a thickness of the integrated panel (242; 442) is one of: a constant thickness or a variable thickness.

7. The integrated primary nozzle of any preceding claim, wherein the acoustic treatment (220; 420) extends from a location before the aft end (212) of the forward cowl (120) to within 7.62 cm [three inches] of an aft end (214) of the integrated panel (242; 442).

8. A method for forming an integrated primary nozzle (210; 410), comprising:
manufacturing (510) an integrated panel (242; 442) as an integrally formed combination of an aft cowl (130; 330), an acoustic treatment (220; 420), and a portion of a primary nozzle outer wall (230; 430);
determining (520) a size of an annular vent (240; 440);
positioning (530) the integrated panel (242; 442) concentrically to a forward cowl (120) such that the annular vent (240; 440) has the determined size, and
wherein the acoustic treatment is an acoustic liner that includes a honeycomb core sandwiched between a perforated front sheet and a solid back sheet.

9. The method of claim 8, wherein positioning (530) the integrated panel (242; 442) comprises placing a portion of the integrated panel (242; 442) within an inner surface (216) of the forward cowl (120).

10. The method of claims 8 or 9, wherein positioning (530) the integrated panel (242; 442) comprises positioning the integrated panel (242; 442) within 30.48 cm [twelve inches] of a beginning (252) of a slope of a plug (140).

11. The method of one of claims 8 to 10, wherein determining (520) the size of the annular vent (240; 440) comprises determining the size of the annular vent (240; 440) such that a gap (232) that is formed between an inner surface (216) of the forward cowl (120) and an outer surface of the integrated panel (242; 442) is less than 2.54 cm [one inch].

12. The method of one of claims 8 to 11, wherein manufacturing (510) the integrated panel (242; 442) comprises manufacturing the integrated panel (242; 442) to have a substantially constant thickness.

13. The method of one of claims 8 to 12, wherein manufacturing (510) the integrated panel (242; 442) that includes the acoustic treatment (220; 420) comprises sandwiching the honey comb acoustic treatment between the aft cowl (130; 330) and the primary nozzle outer wall (230; 430).

## Patentansprüche

1. Integrierte Primärdüse (210; 410), umfassend:
eine vordere Verkleidung (120);
eine integrierte Platte (242; 442), die konzentrisch zu der vorderen Verkleidung (120) angeordnet ist und sich in Längsrichtung über ein hinteres Ende (212) der vorderen Verkleidung (120) hinaus erstreckt, wobei die integrierte Platte (242; 442) eine integral gebildete Kombination aus einer Primärdüsenaußenwand (230; 430), einer akustischen Behandlungseinrichtung (220; 420) und einer hinteren Verkleidung (130; 330) ist; und
eine ringförmige Entlüftung (240; 440), die zwischen einer Außenfläche (218) der integrierten Platte (242; 442) und einer Innenfläche (216) der vorderen Verkleidung (120) ausgebildet ist; und wobei die akustische Behandlungseinrichtung eine akustische Auskleidung ist, die einen Wabenkern beinhaltet, der sandwich-artig zwischen einer perforierten Vorderplatte und einer festen Rückplatte angeordnet ist.

2. Integrierte Primärdüse nach Anspruch 1, wobei die akustische Behandlungseinrichtung (220; 420) zwischen der hinteren Verkleidung (130; 330) und der Primärdüsenaußenwand (230; 430) angeordnet ist.

3. Integrierte Primärdüse nach einem beliebigen vorhergehenden Anspruch, wobei die ringförmige Entlüftung (240; 440) einen Spalt (232) beinhaltet, der durch die Außenfläche (218) der integrierten Platte (242; 442) und die Innenfläche (216) der vorderen Verkleidung (120) definiert ist.

4. Integrierte Primärdüse nach einem beliebigen vorhergehenden Anspruch, wobei ein Spalt zwischen der Außenfläche (218) der integrierten Platte (242; 442) und der Innenfläche (216) der vorderen Verkleidung0 (120) an einem hinteren Ende (212) der vorderen Verkleidung (120) kleiner ist als 2,54 cm [ein Zoll].

5. Integrierte Primärdüse nach einem beliebigen vorhergehenden Anspruch, wobei das hintere Ende (212) der vorderen Verkleidung (120) innerhalb von 30,48 cm [ein Fuß] von einem hinteren Ende (214) der integrierten Platte (242; 442) positioniert ist.

6. Integrierte Primärdüse nach einem beliebigen vorhergehenden Anspruch, wobei eine Dicke der integrierten Platte (242; 442) eine der folgenden ist: eine konstante Dicke oder eine variable Dicke.

7. Integrierte Primärdüse nach einem beliebigen vorhergehenden Anspruch, wobei sich die akustische Behandlungseinrichtung (220; 420) von einer Stelle vor dem hinteren Ende (212) der vorderen Verkleidung (120) bis innerhalb von 7,62 cm [drei Zoll] von einem hinteren Ende (214) der integrierten Platte (242; 442) erstreckt.

8. Verfahren zum Bilden einer integrierten Primärdüse (210; 410), umfassend:
Herstellen (510) einer integrierten Platte (242; 442) als eine integral gebildete Kombination aus einer hinteren Verkleidung (130; 330), einer akustischen Behandlungseinrichtung (220; 420) und einem Abschnitt einer Primärdüsenaußenwand (230; 430);
Bestimmen (520) einer Größe einer ringförmigen Entlüftung (240; 440);
Positionieren (530) der integrierten Platte (242; 442) konzentrisch zu einer vorderen Verkleidung (120), so dass die ringförmige Entlüftung (240; 440) die bestimmte Größe aufweist, und
wobei die akustische Behandlungseinrichtung eine akustische Auskleidung ist, die einen Wabenkern beinhaltet, der sandwich-artig zwischen einer perforierten Vorderplatte und einer festen Rückplatte angeordnet ist.

9. Verfahren nach Anspruch 8, wobei das Positionieren (530) der integrierten Platte (242; 442) das Anordnen eines Abschnitts der integrierten Platte (242; 442) innerhalb einer Innenfläche (216) der vorderen Abdeckung (120) umfasst.

10. Verfahren nach Anspruch 8 oder 9, wobei das Positionieren (530) der integrierten Platte (242; 442) das Positionieren der integrierten Platte (242; 442) innerhalb von 30,48 cm [zwölf Zoll] von einem Anfang (252) einer Neigung eines Zapfens (140) umfasst.

11. Verfahren nach einem der Ansprüche 8 bis 10, wobei das Bestimmen (520) der Größe der ringförmigen Entlüftung (240; 440) das Bestimmen der Größe der ringförmigen Entlüftung (240; 440) auf solche Weise umfasst, dass ein Spalt (232), der zwischen einer Innenfläche (216) der vorderen Verkleidung (120) und einer Außenfläche der integrierten Platte (242; 442) gebildet wird, kleiner ist als 2,54 cm [ein Zoll].

12. Verfahren nach einem der Ansprüche 8 bis 11, wobei das Herstellen (510) der integrierten Platte (242; 442) das Herstellen der integrierten Platte (242; 442) umfasst, so dass diese eine im Wesentlichen konstante Dicke hat.

13. Verfahren nach einem der Ansprüche 8 bis 12, wobei das Herstellen (510) der integrierten Platte (242; 442), die die akustische Behandlungseinrichtung (220; 420) beinhaltet, das sandwich-artige Anordnen der wabenartigen akustischen Behandlungseinrichtung zwischen der hinteren Verkleidung (130; 330) und der Primärdüsenaußenwand (230; 430) umfasst.

## Revendications

1. Tuyère primaire intégrée (210 ; 410), comprenant :
un capot avant (120) ;
un panneau intégré (242 ; 442) concentrique au capot avant (120) et s'étendant longitudinalement au-delà d'une extrémité arrière (212) du capot avant (120), le panneau intégré (242 ; 442) étant une combinaison formée d'un seul tenant d'une paroi extérieure (230 ; 430) de tuyère primaire, d'un traitement acoustique (220 ; 420) et d'un capot arrière (130 ; 330) ; et
un évent annulaire (240 ; 440) formé entre une surface extérieure (218) du panneau intégré (242 ; 442) et une surface intérieure (216) du capot avant (120) ; et le traitement acoustique étant un revêtement acoustique qui comprend une âme en nid d'abeille prise en sandwich entre une feuille avant perforée et une feuille arrière pleine.

2. Tuyère primaire intégrée selon la revendication 1, le traitement acoustique (220 ; 420) étant disposé entre le capot arrière (130 ; 330) et la paroi extérieure (230 ; 430) de tuyère primaire.

3. Tuyère primaire intégrée selon l'une quelconque des revendications précédentes, l'évent annulaire (240 ; 440) comprenant un espace (232) défini par la surface extérieure (218) du panneau intégré (242 ; 442) et la surface intérieure (216) du capot avant (120).

4. Tuyère primaire intégrée selon l'une quelconque des revendications précédentes, un espace entre la surface extérieure (218) du panneau intégré (242 ; 442) et la surface intérieure (216) du capot avant (120) au niveau d'une extrémité arrière (212) du capot avant (120) étant inférieur à 2,54 cm [un pouce].

5. Tuyère primaire intégrée selon l'une quelconque des revendications précédentes, l'extrémité arrière (212) du capot avant (120) étant positionnée à 30,48 cm [un pied] d'une extrémité arrière (214) du panneau intégré (242 ; 442).

6. Tuyère primaire intégrée selon l'une quelconque des revendications précédentes, une épaisseur du panneau intégré (242 ; 442) étant l'une parmi : une épaisseur constante ou une épaisseur variable.

7. Tuyère primaire intégrée selon l'une quelconque des revendications précédentes, le traitement acoustique (220 ; 420) s'étendant d'un emplacement avant l'extrémité arrière (212) du capot avant (120) à 7,62 cm [trois pouces] ou moins d'une extrémité arrière (214) du panneau intégré (242 ; 442).

8. Procédé pour former une tuyère primaire intégrée (210 ; 410), comprenant les étapes consistant à :
fabriquer (510) un panneau intégré (242 ; 442) en tant que combinaison formée d'un seul tenant d'un capot arrière (130 ; 330), d'un traitement acoustique (220 ; 420) et d'une partie d'une paroi extérieure (230 ; 430) de tuyère primaire ;
déterminer (520) la taille d'un évent annulaire (240 ; 440) ;
positionner (530) le panneau intégré (242 ; 442) concentriquement à un capot avant (120) de sorte que l'évent annulaire (240 ; 440) ait la taille déterminée, et
le traitement acoustique étant un revêtement acoustique qui comprend une âme en nid d'abeilles prise en sandwich entre une feuille avant perforée et une feuille arrière pleine.

9. Procédé selon la revendication 8, le positionnement (530) du panneau intégré (242 ; 442) comprenant l'étape consistant à placer une partie du panneau intégré (242 ; 442) dans une surface intérieure (216) du capot avant (120).

10. Procédé selon la revendication 8 ou 9, le positionnement (530) du panneau intégré (242 ; 442) comprenant l'étape consistant à positionner le panneau intégré (242 ; 442) à 30,48 cm [douze pouces] ou moins d'un début (252) d'une pente d'un bouchon (140).

11. Procédé selon l'une des revendications 8 à 10, la détermination (520) de la taille de l'évent annulaire (240 ; 440) comprenant l'étape consistant à déterminer la taille de l'évent annulaire (240 ; 440) de sorte qu'un espace (232) qui est formé entre une surface intérieure (216) du capot avant (120) et une surface extérieure du panneau intégré (242 ; 442) soit inférieur à 2,54 cm [un pouce].

12. Procédé selon l'une des revendications 8 à 11, la fabrication (510) du panneau intégré (242 ; 442) comprenant l'étape consistant à fabriquer le panneau intégré (242 ; 442) pour avoir une épaisseur sensiblement constante.

13. Procédé selon l'une des revendications 8 à 12, la fabrication (510) du panneau intégré (242 ; 442) qui comprend le traitement acoustique (220 ; 420) comprenant l'étape consistant à mettre en sandwich le traitement acoustique en nid d'abeille entre le capot arrière (130 ; 330) et la paroi extérieure (230 ; 430) de tuyère primaire.
